# EUROPÄISCHE PATENTSCHRIFT

(11) **EP 1 474 429 B1**
(45) Veröffentlichungstag und Bekanntmachung des Hinweises auf die Patenterteilung: **23.08.2006**
(21) Anmeldenummer: 03714721.2
(22) Anmeldetag: 03.02.2003
(51) Int. Cl.: C07F 1/02

(54) **VERFAHREN ZUR HERSTELLUNG VON ALKYLLITHIUMVERBINDUNGEN MITTELS VERDUESUNG VON LITHIUMMETALL**
METHOD FOR THE PRODUCTION OF ALKYL LITHIUM COMPOUNDS BY MEANS OF SPRAYING OF LITHIUM METAL
PROCEDE DE PRODUCTION DE COMPOSES D'ALKYLLITHIUM PAR PULVERISATION DE METAL LITHIUM

(30) Priorität: 06.02.2002 DE 10204680
(43) Veröffentlichungstag der Anmeldung: 10.11.2004
(73) Patentinhaber: Chemetall GmbH, 60487 Frankfurt (DE)
(72) Erfinder: DOLLING, Eike, 38642 Goslar (DE); KALETKA, Günther, 38685 Langelsheim (DE)
(74) Vertreter: Uppena, Franz
(86) Internationale Anmeldenummer: PCT/EP2003/001034
(87) Internationale Veröffentlichungsnummer: WO 2003/066640

(56) Entgegenhaltungen:
- WO-A-97/06910
- DATABASE COMPENDEX [Online] ENGINEERING INFORMATION, INC., NEW YORK, NY, US; JEPPSON D W ET AL: "SOME SAFETY CONSIDERATIONS OF LIQUID LITHIUM AS A FUSION BREEDER MATERIAL" Database accession no. EIX87030043929 XP002241341 & PROC OF THE SEVENTH TOP MEET ON THE TECHNOL OF FUSION ENERGY;RENO, NV, USA JUN 15-19 1986, Bd. 10, Nr. 3 part 2B, 15. Juni 1986 (1986-06-15), Seiten 1211-1215, Fusion Technol Nov 1986
- DATABASE COMPENDEX [Online] ENGINEERING INFORMATION, INC., NEW YORK, NY, US; ALBRECHT J ET AL: "Structure and properties of P/M-aluminum alloys" Database accession no. EIX92021161660 XP002241342 & PROCEEDINGS OF THE 2ND SYMPOSIUM ON LIGHT-WEIGHT ALLOYS FOR AEROSPACE APPLICATIONS PRESENTED AT THE 1991 TMS ANNUAL MEETING;NEW ORLEANS, LA, USA FEB 17-21 1991, 1991, Seiten 77-86, Warrendale, PA, USA

## Beschreibung

Die Erfindung betrifft ein Verfahren zur Herstellung von Alkyllithiumverbindungen, bei dem Lithiummetall zu einer Lithiumdispersion verdüst wird.

Alkyllithiumverbindungen werden hergestellt durch Umsetzung organischer Halogenverbindungen mit metallischem Lithium. Gewöhnlich wird die Reaktion in Kohlenwasserstoffen oder in Ethern als Lösungsmittel durchgeführt.

Die WO 95/01982 beschreibt detailliert die Herstellung von Alkyllithiumverbindungen aus Lithiummetalldispersion und Alkylhalogenid, wobei auf den Natriumgehalt des Lithiums, auf den Lithiumüberschuss relativ zum Alkylhalogenid, auf das Alkylhalogenid, auf die Dosierrate, auf das Lösungsmittel, auf den Einfluss von Wasserspuren in der Reaktion und auf die Reaktionstemperatur eingegangen wird. Die Reaktion zwischen Lithium und Alkylhalogenid wird je nach verwendetem Lösungsmittel am Siedepunkt des Lösemittels zwischen 50 und 100 °C, oder zwischen 50 und 125 °C unterhalb des Siedepunktes des Lösungsmittels durchgeführt.

Die WO 96/40692 beschreibt ein Verfahren zur Herstellung von Lithiumorganischen Lösungen, bei dem gegossene oder extrudierte Lithiumstäbe mit einem Alkylhalogenid (z.B. n-, s- oder t-Butylchlorid) im molaren Überschuss von 3 : 1 bis 20 : 1 in einem Lösungsmittel unter Schutzgasatmosphäre während 1 bis 10 Stunden unter moderatem Rühren reagieren und das Produkt von Lithiummetall und dem Nebenprodukt LiCl im Reaktor abgetrennt wird. Bei einer ebenfalls in der WO 96/40692 beschriebenen Verfahrensvariante wird bei der Reaktion nicht gerührt (das gebildete LiCl verbleibt auf dem Li-Metall), die Produktlösung wird abgetrennt, und das überschüssige Li-Metall reagiert nach Abtrennen des LiCl (z.B. durch Zugabe von Lösungsmittel, Aufrühren und Abtrennen der LiCl-Suspension) zusammen mit neu zugegebenem Metall im ergänzten Lösungsmittel erneut mit zugegebenem Alkylhalogenid.

Die WO 97/06910 betrifft die Herstellung einer Li-Dispersion in einem Kohlenwasserstoff unter Ar- Atmosphäre aus 300g Lithiummetall und einer geringen Menge Natriummetall (2,25g) durch schnelles Rühren bei einer Temperatur oberhalb des Schmelzpunkts der Metalle und Zugabe von CO₂ was die Bildung einer Schutzschicht auf der Oberfläche der gebildeten Metallkügelchen bewirkt.

Die Oberfläche des Lithium-Metalls beeinflusst das Anspringen der Reaktion und deren weiteren Verlauf. Günstig ist eine große Oberfläche des Lithiums. Zur Erzeugung einer großen Lithium-Oberfläche wird Lithium-Metall dispergiert. Bei der Dispergierung in einer inerten Flüssigkeit wird die Metallschmelze zusammen mit der inerten Flüssigkeit auf eine Temperatur oberhalb des Schmelzpunktes des Metalls gebracht. Durch Anwendung hochturbulenter Scherfelder wird das Metall in kleine Partikel zerlegt. Dabei bedient man sich effektiver Rührwerke wie z.B. Dispergierscheiben und Dispergierturbinen, Rotor-Stator Anordnungen wie z.B. Ultra-Turrax, Schall-bzw. Ultraschallgeneratoren und weiterer Verfahren. Den Verfahren zur Dispergierung von Lithium-Metall ist gemeinsam, dass nach der Erzeugung der Dispersion bei Temperaturen oberhalb des Lithiumschmelzpunktes die Dispersion auf Temperaturen unterhalb des Lithiumschmelzpunktes abgekühlt wird, wobei die erzeugten Lithiumpartikel in den festen Zustand übergehen. Damit dabei die erzeugte disperse Phase erhalten bleibt, ist bei Lithiumpartikeln kleiner Korngröße der Zusatz von Dispergierhilfsmitteln, wie z.B. Öle, gebräuchlich.

Als inerte Flüssigkeit werden in der Regel gesättigte Kohlenwasserstoffe, wie z.B. Paraffin, eingesetzt. Nach der Abkühlung muss bei der Verwendung von Paraffin als inerte Flüssigkeit ein aufwendiger Lösungsmitteltausch vorgenommen werden, bei dem auch das Dispergierhilfsmittel ausgewaschen wird. Der Lösungsmitteltausch ist deshalb notwendig, weil die Synthese der Alkyllithiumverbindungen in niedriger siedenden Lösungsmitteln vorgenommen wird. Als inerte Flüssigkeit bei der Dispergierung können auch niedriger als Paraffin siedende aliphatische oder aromatische Kohlenwasserstoffe, wie z.B. Hexan, Heptan oder Toluol, eingesetzt werden. Von Vorteil dabei ist, dass dann auf einen Lösungsmitteltausch verzichtet werden kann. Allerdings erfordert die Schmelztemperatur von Lithium (181 °C), die über dem Siedepunkt dieser Lösungsmittel bei Normaldruck liegt, ein nachteiliges Arbeiten unter Druck. Um den erforderlichen Druckbereich nicht zu stark anzuheben zu müssen, sind der Auswahl der Lösungsmittel bestimmte Grenzen gesetzt. Nachteilig ist auch hier die Notwendigkeit, die Dispergierhilfsmittel entfernen zu müssen.

Aufgabe der Erfindung ist es, die Nachteile des Standes der Technik zu überwinden und ein Verfahren zur Herstellung von Alkyllithiumverbindungen zu schaffen, bei dem Lithium-Metall mit einer sehr großen Oberfläche eingesetzt wird, wobei bei der Erzeugung der Lithiumpartikel in einem inerten Lösungsmittel die Wahl des Lösungsmittels nicht eingeschränkt ist und wobei auf Dispergierhilfsmittel verzichtet werden kann.

Die Aufgabe wird durch ein Verfahren gelöst, bei dem Lithiumpartikel durch Verdüsung von schmelzflüssigem Lithium in einer inerten Gasatmosphäre oder im Vakuum erzeugt werden und die Lithiumpartikel anschließend in bekannter Weise mit einem Alkylhalogenid in einem Lösungsmittel umgesetzt werden.

Die Verdüsung des Lithiums kann mit Einstoffdruckdüsen oder bevorzugt mit Zweistoffdüsen vorgenommen werden. Der Vorteil der Zweistoffdüse besteht darin, dass das geschmolzene Lithium typischerweise drucklos oder bei geringem Überdruck (z.B. 1 bis 500 mbar) vorliegt und durch einen Treibstrahl aus Inertgas in kleine Metallpartikel zerlegt wird. Als Inertgas für den Treibstrahl und/oder für die inerte Gasatmosphäre wird bevorzugt Argon eingesetzt. Damit es in der Düse nicht zur Erstarrung des flüssigen Lithiums kommt, ist die Düse bevorzugt geheizt, z.B. durch Induktionsheizung oder Wärmeträgeröl.

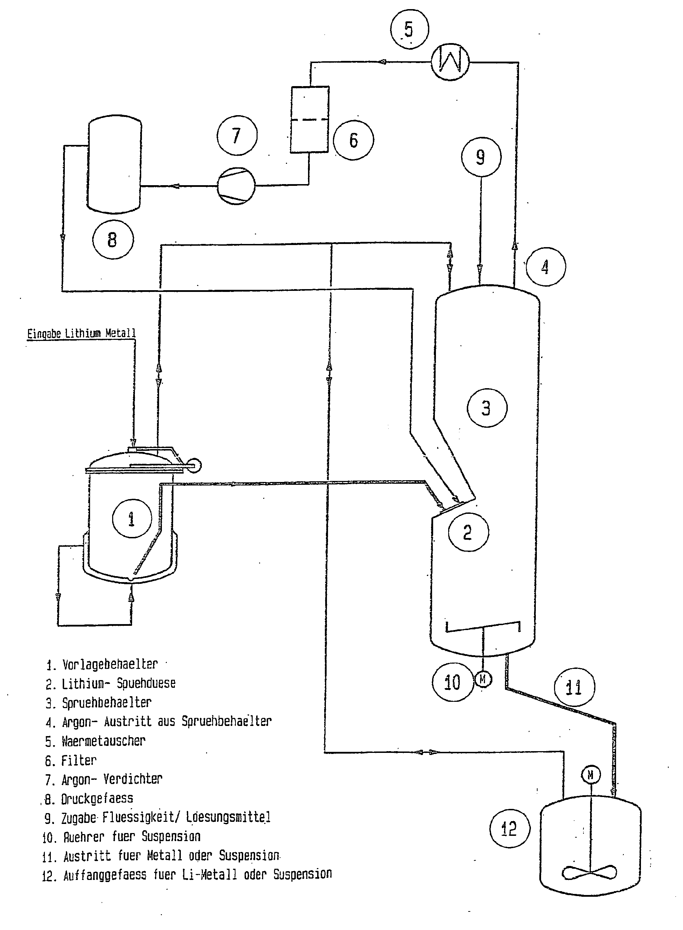

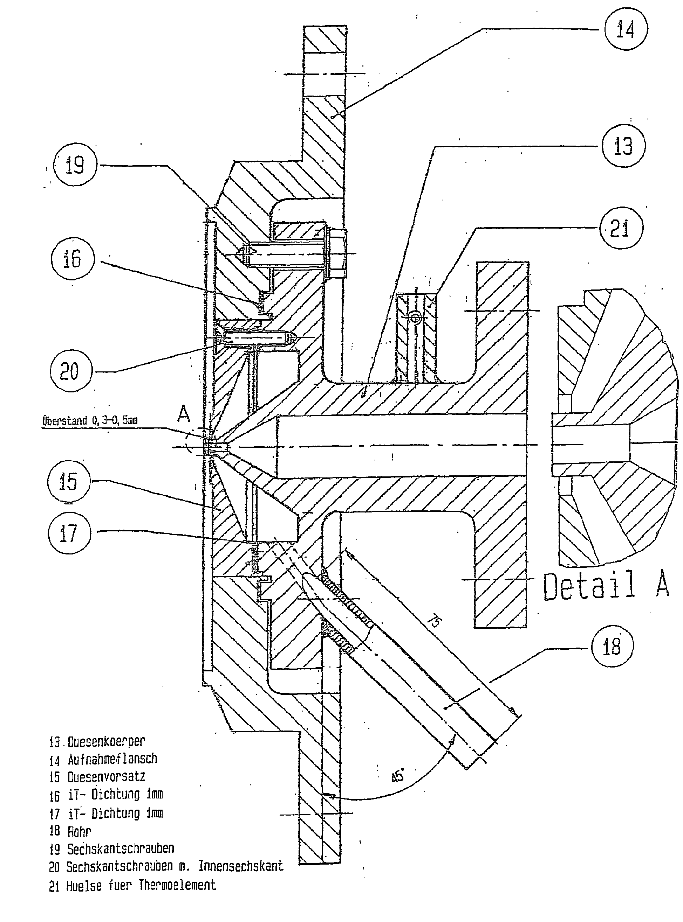

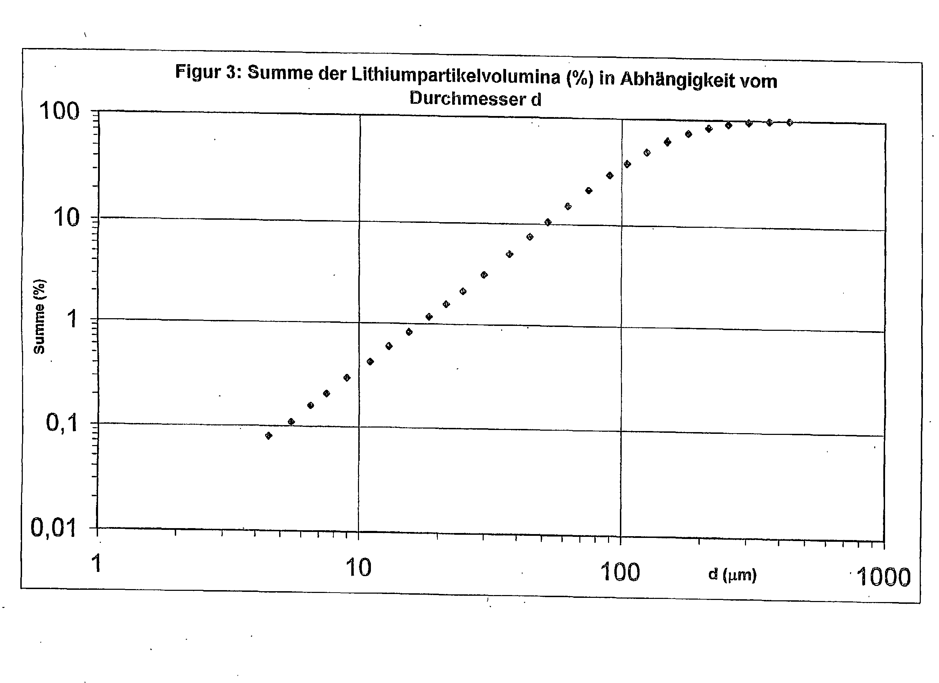

Ein bevorzugtes Verfahren wird beispielhaft anhand der Figur 1 näher erläutert, ohne dass damit eine Einschränkung verbunden ist. Das Lithium wird im beheizten Behälter 1 geschmolzen (ein bevorzugter Temperaturbereich ist 190 bis 250 C°, besonders bevorzugt 200 bis 230 °C). Der Flüssigkeitsspiegel im Behälter 1 befindet sich bevorzugt in etwas geringerer Höhe als die Düsenmündung der Düse 2. Dadurch wird verhindert, dass schmelzflüssiges Lithium unbeabsichtigt aus dem Behälter 1 läuft. Vom Behälter 1 gelangt das Lithium in die Düse 2, wo es im Argonstrom in einen Sprühbehälter 3 verdüst wird. Eine Düse ist in der Figur 2 abgebildet. Bevorzugt hat die Düse einen Mündungsüberstand des lithiumführenden zentrischen Bauteils von 0,1 bis 1 mm, besonders bevorzugt von 0,3 bis 0,5 mm. Der Innendurchmesser des lithiumführenden zentrischen Bauteils beträgt bevorzugt 1 bis 5 mm, besonders bevorzugt 2 bis 4 mm. Um das lithiumführende zentrische Bauteil strömt das Argon aus der Düse 2 in den Sprühbehälter 3. Dadurch wird lokal an der Düsenmündung gegenüber dem Druck im Sprühbehälter ein Unterdruck von bevorzugt mindestens -200 mbar, besonders bevorzugt von -500 bis -700 mbar, erzeugt. Dieser Unterdruck an der Düsenmündung reicht aus, um das schmelzflüssige Lithium aus dem Behälter 1 anzusaugen. Je höher der Unterdruck (dieser ist u.a. abhängig von der Geometrie der Zweistoffdüse, vom Vordruck des Argons, vom Volumenstrom des Argons und von der Fließgeschwindigkeit des Argons) gewählt wird, desto weniger treten Verkrustungen von Lithium an der Düsenmündung auf. Der Vordruck des Argons beträgt bevorzugt 5 bis 10 bar, besonders bevorzugt 7 bis 9 bar. Durch den Drucksprung an der Düsenmündung kühlt sich das Argon soweit ab, dass das zu kleinen Partikeln verdüste Lithium erstarrt. Die mittlere Korngröße der Lithiumpartikel lässt sich durch die Düsengeometrie, den Düsendurchmesser und den Argondruck variieren. Die Lithiumpartikel haben mittlere Korngrößen (Partikeldurchmesser) von bevorzugt < 300 µm, besonders bevorzugt von 50 bis 150 µm. Als optimal haben sich Korngrößen von 100 bis 130 µm erwiesen. Figur 3 zeigt eine typische Summe der Lithiumpartikelvolumina (in % des Gesamtvolumens) in Abhängigkeit vom Partikeldurchmesser d. Die Korngrößenbestimmung wurde mittels LASERBeugung durchgeführt (Gerät Sympatec Helos der Firma Sympatec, Sensor und Auswertesoftware: Helos, Dispergiersystem: Cuvette, Brennweite der Fokussierungsoptik: 500 mm, Messdauer: 5 Sekunden, Küvettenmessstrecke: 21 mm, Rührerdrehzahl: 90 U/Min). Zur Messung wird eine Suspension der Lithiumpartikel (Lösungsmittel: Hexan) in die Küvette gefüllt und mit einem Magnetrührer gerührt. Die Messung wird in üblicher Weise mit den beschriebenen Parametern durchgeführt.

Der das Lithium enthaltende Behälter 1 und der Sprühbehälter 3 sind über eine Druckausgleichsleitung miteinander verbunden. Die erzeugten Lithiumpartikel werden in dem Sprühbehälter 3 aufgefangen.

Das Argon wird über eine Rohrleitung 4 aus dem Sprühbehälter 3 über eine Kühlung 5 und über einen Feinfilter 6 dem Verdichter 7 zugeführt und in dem Argondruckbehälter 8 zwischengespeichert, von wo es erneut in die Düse 2 gelangt. Bevorzugt ist der Argondruck innerhalb des Systems gegenüber der Umgebung (Atmosphärendruck) leicht erhöht, z. B. um 100 bis 500 mbar.

Bevorzugt ist die Düse 2 in Höhe des mittleren Drittels des Sprühbehälters 3 angebracht. So können sich feinste Lithiummetallpartikel im über der Düse gelegenen Raum aus dem Argongas abscheiden, bevor dieses über die Rohrleitung 4 aus dem Sprühbehälter 3 austritt.

Die durch Verdüsung erzeugten Lithiumpartikel können dem Sprühbehälter direkt entnommen werden oder mittels eines Lösungsmittels in eine Suspension überführt werden. Die so erzeugten Lithiumpartikel, bzw. die so erzeugte Lithiumsuspension können in bekannter Weise mit einem Alkylhalogenid zur entsprechenden Alkyllithiumverbindung umgesetzt werden. Bevorzugt ist die Herstellung von n-, s-, t-, und iso-Butyllithium.

Von Vorteil des erfindungsgemäßen Verfahrens ist es, dass es zur Herstellung der Lithiumpartikel keiner Dispergierhilfsmittel bedarf und es zu keinen durch Dispergierhilfsmittel bedingte Verunreinigungen kommt. Weiterhin können die durch Verdüsung hergestellten Lithiumpartikel in jedem bei der Herstellung von Alkyllithium gebräuchlichen Lösungsmittel suspendiert werden. Das Verfahren ist also nicht auf bestimmte Lösungsmittel beschränkt, bzw. es muss kein aufwendiger Lösungsmitteltausch vorgenommen werden.

## Patentansprüche

1. Verfahren zur Herstellung von Alkyllithiumverbindungen, bei dem metallisches Lithium mit einem Alkylhalogenid in einem Lösungsmittel umgesetzt wird, **dadurch gekennzeichnet, dass** das metallische Lithium in Form von Lithiumpartikeln, die durch Verdüsung von schmelzflüssigem Lithium in einer inerten Gasatmosphäre oder im Vakuum erzeugt werden, eingesetzt wird.

2. Verfahren nach Anspruch 1, **dadurch gekennzeichnet, dass** die Verdüsung des Lithiums mit einer Einstoffdruckdüse vorgenommen wird.

3. Verfahren nach Anspruch 1, **dadurch gekennzeichnet, dass** die Verdüsung des Lithiums mit einer Zweistoffdüse vorgenommen wird.

4. Verfahren nach Anspruch 3, **dadurch gekennzeichnet, dass** zum Verdüsen des Lithiummetalls in der Zweistoffdüse Argon eingesetzt wird.

## Claims

1. A method of producing alkyllithium compounds, in which metallic lithium is reacted with an alkyl halide in a solvent, **characterised in that** the metallic lithium is used in the form of lithium particles which are produced by atomisation of molten lithium in an inert gas atmosphere or in a vacuum.

2. A method according to claim 1, **characterised in that** atomisation of the lithium is performed with a single-fluid pressure nozzle.

3. A method according to claim 1, **characterised in that** atomisation of the lithium is performed with a two-fluid nozzle.

4. A method according to claim 3, **characterised in that** argon is used to atomise the lithium metal in the two-fluid nozzle.

## Revendications

1. Procédé de préparation de composés de type alkyl-lithium, dans lequel on fait réagir du lithium métallique avec un halogénure d'alkyle dans un solvant, **caractérisé en ce qu'**on utilise du lithium métallique à l'état de particules de lithium produites par pulvérisation, sous atmosphère de gaz inerte ou sous vide, de lithium liquide fondu.

2. Procédé conforme à la revendication 1, **caractérisé en ce que** l'on réalise la pulvérisation du lithium au moyen d'une tuyère monoflux à pression.

3. Procédé conforme à la revendication 1, **caractérisé en ce que** l'on réalise la pulvérisation du lithium au moyen d'une tuyère biflux.

4. Procédé conforme à la revendication 3, **caractérisé en ce que** l'on utilise de l'argon pour la pulvérisation du lithium dans la tuyère biflux.
